# EUROPEAN PATENT APPLICATION

(11) **EP 4 529 141 A1**
(43) Date of publication of application: **26.03.2025**
(21) Application number: 23835649.7
(22) Date of filing: 03.04.2023
(51) Int. Cl.: H04M 1/02, H05K 7/14, H05K 5/00

(54) **ELECTRONIC DEVICE INCLUDING SUPPORT MEMBER**

(30) Priority: 06.07.2022 KR 20220083146; 29.07.2022 KR 20220094803
(71) Applicant: Samsung Electronics Co., Ltd., Suwon-si, Gyeonggi-do 16677 (KR)
(72) Inventor: KANG, Yitae, Suwon-si, Gyeonggi-do 16677 (KR); YANG, Jaeyoung, Suwon-si, Gyeonggi-do 16677 (KR); JEONG, Munjin, Suwon-si, Gyeonggi-do 16677 (KR)
(74) Representative: Appleyard Lees IP LLP
(86) International application number: PCT/KR2023/004472
(87) International publication number: WO 2024/010180

(57) **Abstract**

An electronic device according to an embodiment may include a housing including a first plate facing a first direction, a second plate facing a second direction opposite the first direction, and a side member which at least partially surrounds a space formed between the first plate and the second plate and has at least one groove formed concavely on an inner face in a third direction facing an outside of the electronic device, a support member disposed inside the space and including a first face facing the first direction and a second face facing the second direction, and a coupling member which includes a first portion disposed on the first face of the support member, a second portion extending from the first portion and protruding a first interval from the support member in the third direction, and a third portion extending from the second portion and fixed to the second face of the support member. The support member may include at least one guide groove formed such that the first portion of the coupling member is guided along the first face of the support member. The second portion of the coupling member may be accommodated in the at least one groove to fix the support member to the housing, and may be deformed so as to protrude a second interval shorter than the first interval from the support member as the first portion of the coupling member moves along the guide groove on the first face.

Various other embodiments understood through the specification are also possible.

## Description

### [Technical Field]

Various embodiments of the disclosure relate to an electronic device including a support member.

### [Background Art]

Electronic devices (e.g., a mobile terminal, a smartphone, a wearable device, etc.) may provide various functions. For example, in addition to a basic voice communication function, the smartphone may provide various functions such as a short-range wireless communication (e.g., Bluetooth^{™}, Wireless Fidelity (Wi-Fi), Near Field Communication (NFC), etc.) function, a mobile communication (3^{rd} Generation (3G), 4^{th} Generation (4G), 5^{th} Generation (5G), etc.) function, a music or video playback function, a photographing function, a navigation function, or the like. The electronic device may include an antenna to provide the aforementioned functions.

The electronic device may include various types of connection structures for electrical coupling between components. For example, the electronic device may include a connection node for connecting the antenna and a printed circuit board included in the electronic device.

The electronic device may include at least one support member which supports components disposed inside the electronic device or which forms a space in which the components are disposed.

### [Disclosure of Invention]

### [Solution to Problem]

An electronic device according to various embodiments of the disclosure may include a housing including a first plate facing a first direction, a second plate facing a second direction opposite the first direction, and a side member which at least partially surrounds a space formed between the first plate and the second plate and has at least one groove formed concavely on an inner face in a third direction facing an outside of the electronic device, a support member disposed inside the space and including a first face facing the first direction and a second face facing the second direction, and a coupling member which includes a first portion disposed on the first face of the support member, a second portion extending from the first portion and protruding a first interval from the support member in the third direction, and a third portion extending from the second portion and fixed to the second face of the support member. The support member may include at least one guide groove formed such that the first portion of the coupling member is guided along the first face of the support member. The second portion of the coupling member may be accommodated in the at least one groove to fix the support member to the housing, and may be deformed so as to protrude a second interval shorter than the first interval from the support member as the first portion of the coupling member moves along the guide groove on the first face.

An electronic device according to an embodiment of the disclosure may include a housing including a front plate, a rear plate, and a side member surrounding a space formed between the front plate and the rear plate and including at least one groove formed concavely on an inner face, a support member disposed inside the space and including a first face facing the front plate and a second face facing the rear plate, and a coupling member which includes a first portion disposed on the first face of the support member, a second portion extending from the first portion and protruding a first interval from the support member toward the side member, and a third portion extending from the second portion and fixed to the second face of the support member. The support member may include at least one guide groove formed such that the first portion of the coupling member is guided along the first face of the support member. The second portion of the coupling member may be accommodated in the at least one groove to fix the support member to the housing, and may be deformed so as to protrude a second interval shorter than the first interval from the support member as the first portion of the coupling member moves along the guide groove on the first face.

### [Brief Description of Drawings]

FIG. 1 is a front perspective view of an electronic device according to an embodiment;
FIG. 2 is a rear perspective view of the electronic device of FIG. 1;
FIG. 3 is a cross-sectional view of an electronic device according to an embodiment;
FIG. 4 is a plan view of a support member according to an embodiment;
FIG. 5 is a perspective view of a support member to which a coupling member is disposed according to an embodiment;
FIG. 6 is a cross-sectional view taken along the line A-A' of FIG. 5 according to an embodiment;
FIG. 7 is a perspective view of a coupling member according to an embodiment;
FIG. 8 is a perspective view illustrating an operation in which a coupling member is joined to a support member according to an embodiment;
FIG. 9 is a perspective view of a support member to which a coupling member is disposed by the operation of FIG. 8 according to an embodiment;
FIG. 10 is a cross-sectional perspective view taken along the line B-B' of FIG. 9 according to an embodiment;
FIG. 11 is a perspective view illustrating an operation in which a coupling member is joined to a support member according to an embodiment;
FIG. 12 is a perspective view illustrating a second face of a support member to which a coupling member is disposed according to an embodiment;
FIG. 13 is a cross-sectional view illustrating a state where a support member having a coupling member disposed thereto is disposed inside a housing according to an embodiment;
FIG. 14 is a cross-sectional view illustrating an operation in which a first portion of a coupling member moves along a first face of a support member according to an embodiment;
FIG. 15 is a cross-sectional view illustrating an operation in which a support member is detached from a housing according to an embodiment;
FIG. 16 is a cross-sectional view of an electronic device according to an embodiment;
FIG. 17 is a plan view of a coupling member according to an embodiment; and
FIG. 18 is a cross-sectional view of an electronic device according to an embodiment.

With regard to the description of the drawings, the same or similar reference numerals may be used to refer to the same or similar elements.

### [Mode for the Invention]

Hereinafter, an embodiment of the disclosure is described with reference to the accompanying drawings. However, it should be appreciated that this is not intended to limit the technological features set forth herein to particular embodiments and include various modifications, equivalents, and/or alternatives for an embodiment of the disclosure.

An electronic device according to an embodiment of the disclosure may include, for example, at least one of a smart phone, a tablet Personal Computer (PC), a mobile phone, a video phone, an e-book reader, a desktop PC, a laptop PC, a netbook computer, a workstation, a server, a Personal Digital Assistant (PDA), a Portable Multimedia Player (PMP), an MPEG-1 Audio Layer 3 (MP3) player, a mobile medical device, a camera, and a wearable device. According to an embodiment, the wearable device may include at least one of an accessory-type device (e.g., a watch, a ring, a bracelet, an anklet, a necklace, glasses, contact lenses, or a Head-Mounted Device (HMD)), a fabric- or clothes-integrated device (e.g., electronic clothes), a body attaching-type device (e.g., a skin pad or tattoo), and a body implantable device (e.g., an implantable circuit).

According to embodiments, the electronic device may be a home appliance. The home appliance may include, for example, at least one of a TeleVision (TV), a Digital Video Disk (DVD) player, an audio player, a refrigerator, an air conditioner, a cleaner, an oven, a microwave oven, a washing machine, an air purifier, a set-top box, a home automation control panel, a security control panel, a TV box, a game console, an electronic dictionary, an electronic key, a camcorder, and an electronic picture frame.

According to an embodiment, the electronic device may include at least one of various medical devices (e.g., various portable medical measuring devices (e.g., a blood sugar measuring device, a heartrate measuring device, a blood pressure measuring device, a body temperature measuring device, etc.), Magnetic Resonance Angiography (MRA), Magnetic Resonance Imaging (MRI), Computed Tomography (CT), imaging equipment, ultrasonic instrument, etc.)), a navigation device, a Global Navigation Satellite System (GNSS), an Event Data Recorder (EDR), a Flight Data Recorder (FDR), a car infotainment device, an electronic equipment for ship (e.g., a vessel navigation device, a gyro compass, etc.), avionics, a security device, a car head unit, an industrial or domestic robot, an Automatic Teller's Machine (ATM) of financial institutions, Point Of Sales (POS) of shops, and Internet of things (e.g., a light bulb, various sensors, an electric or gas meter, a sprinkler device, a fire alarm, a thermostat, a streetlamp, a toaster, a fitness equipment, a hot water tank, a heater, a boiler, etc.).

According to an embodiment, the electronic device may include at least one of furniture or part of buildings/constructions, an electronic board, an electronic signature receiving device, a projector, and various measurement machines (e.g., water supply, electricity, gas, propagation measurement machine, etc.). In an embodiment, the electronic device may be one or more combinations of the aforementioned various devices. According to an embodiment, the electronic device may be a flexible device. In addition, the electronic device according to an embodiment of the disclosure is not limited to the aforementioned devices, and may include a new electronic device depending on technical progress.

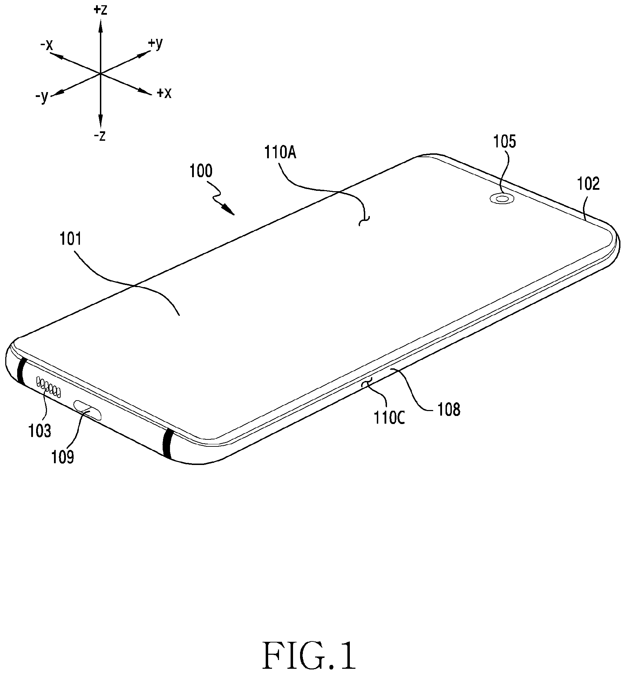

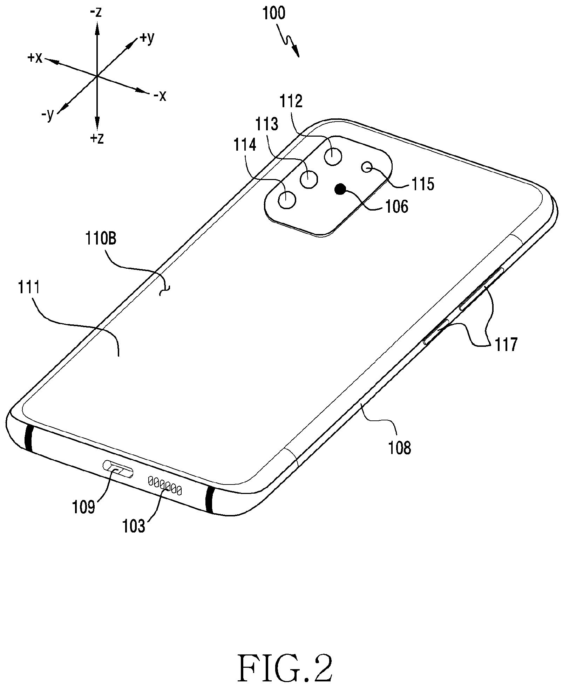

FIG. 1 is a front perspective view of an electronic device 100 according to an embodiment (e.g., the electronic device 100 of FIG. 1), and FIG. 2 is a rear perspective view of the electronic device 100 of FIG. 1.

An electronic device of a bar type is disclosed as an example of the electronic device 100 according to an embodiment of the disclosure. However, the disclose is also applicable to electronic devices of other types such as slidable, rollable, and/or foldable types, and the disclosure is not limited thereto.

Referring to FIG. 1 and FIG. 2, the electronic device 100 according to an embodiment may include a housing 110 including a first face (or a "front face") 110A, a second face (or a "rear face") 110B, and a side face (or a "side wall") 110C surrounding a space between the first face 110A and the second face 110B. In another embodiment (not shown), the housing 110 may refer to a construction which constitutes part of the first face 110A, second face 110B, and side face 110C of FIG. 1 and FIG. 2.

According to an embodiment, the first face 110A may be formed of a front plate 102 (e.g., a polymer plate or a glass plate including various coating layers) which is at least partially transparent in practice. According to an embodiment, at least one side edge portion of the front plate 102 may include a curved portion seamlessly extending by being bent from the first face 110A toward a rear plate 111.

According to an embodiment, the second face 110B may be constructed of the rear plate 111 which is substantially opaque. For example, the rear plate 111 may be constructed of coated or colored glass, ceramic, polymer, metallic materials (e.g., aluminum, stainless steel (STS), or magnesium) or a combination of at least two of these materials. According to an embodiment, the rear plate 111 may include a curved portion seamlessly extending by being bent from the second face 110B toward the front plate 102 in at least one side edge portion.

According to an embodiment, the side face 110C may be formed of a side member 108 joined to the front plate 102 and the rear plate 111 and including metal and/or polymer. In some embodiments, the rear plate 111 and the side member 108 may be formed integrally and may include the same material (e.g., a metallic material such as aluminum).

According to an embodiment, the electronic device 100 may include at least one of a display 101, an audio module 103, a sensor module (not shown), camera modules 115, 112, 113, and 106, a key input device 117, and a connector hole 109. In some embodiments, at least one (e.g., the key input device 117) of components may be omitted in the electronic device 100, or other components may be additionally included.

In an example, the electronic device 100 may include a sensor module (not shown). For example, the sensor module may be disposed to a rear face of a screen display region of the display 101, viewed to the outside of the electronic device 100 through the front plate 102.

For example, although at least one of an optical sensor, an ultrasonic sensor, and a capacitive sensor may be disposed on the rear face of the screen display region of the display 101, the disclosure is not limited thereto.

In some embodiments, the electronic device 100 may further include a light emitting element, and the light emitting element may be disposed at a position adjacent to the display 101 in the region provided by the front plate 102. The light emitting element may provide, for example, state information of the electronic device 100 in an optical form. In another embodiment, the light emitting element may provide, for example, a light source interworking with an operation of a camera module 105. The light emitting element may include, for example, a Light Emitting Diode (LED), an InfraRed (IR) LED, and/or a xenon lamp.

According to an embodiment, the display 101 may be viewed to the outside of the electronic device 100 through some portions of the front plate 102. In some embodiments, an edge of the display 101 may be formed to be substantially the same as a shape of a periphery (e.g., a curved face) adjacent to the front plate 102.

According to another embodiment (not shown), the electronic device 100 may have a recess, notch, or opening formed on a portion of the screen display region of the display 101. Various electronic parts, for example, the camera module 105 or a sensor module (not shown) may be disposed to the recess, the notch, or the opening.

According to another embodiment (not shown), at least one of the camera modules (e.g., 112, 113, 114, and 115), a fingerprint sensor, and a flash (e.g., 106) may be disposed to the second face 110B. According to another embodiment (not shown), the display 101 may be disposed adjacent to or joined with a touch sensing circuit, a pressure sensor capable of measuring touch strength (pressure), and/or a digitizer for detecting a magnetic-type stylus pen.

According to an embodiment, the audio module 103 may include a microphone hole and a speaker hole. The microphone hole may have a microphone disposed inside thereof to acquire external sound. In some embodiments, a plurality of microphones may be disposed inside the microphone hole to sense a sound direction. According to another embodiment, the speaker hole and the microphone hole may be implemented as a single hole, or the speaker (e.g., a piezo speaker) may be included without the speaker hole. The speaker hole may include an external speaker hole and a communication receiver hole.

The electronic device 100 includes a sensor module (not shown) to generate an electrical signal or data value corresponding to an internal operational state or an external environmental state. The sensor module may further include a proximity sensor disposed to the first face 110A of the housing 110, a fingerprint sensor disposed to the rear face of the display 101, and/or a biometric sensor (e.g., a Heart Rate Monitoring (HRM) sensor) disposed to the second face 110B of the housing 110.

The sensor module may further include, for example, at least one of a gesture sensor, a gyro sensor, an atmospheric pressure sensor, a magnetic sensor, an acceleration sensor, a grip sensor, a color sensor, an IR sensor, a biometric sensor, a temperature sensor, a humidity sensor, and an illuminance sensor.

According to an embodiment, the camera modules 105, 112, 113, 114, 115, and 106 may include the first camera module 105 disposed to the first face 110A of the electronic device 100, the second camera modules 112, 113, 114, and 115 disposed to the second face 110B, and/or the flash 106. For example, the camera modules 105, 112, 113, 114, and 115 may include one or more lenses, an image sensor, and/or an image signal processor. The flash 106 may include, for example, an LED or a xenon lamp. In an embodiment, two or more lenses (an infrared camera, wide-angle and telephoto lenses) and image sensors may be disposed to a face of the electronic device 100.

According to an embodiment, the key input device 117 may be disposed to the side face 110C of the housing 110. In another embodiment, the electronic device 100 may not include the entirety or part of the aforementioned key input device 117. The key input device 117, which is not included, may be implemented on the display 101 in a different form such as a soft key or the like. In some embodiments, the key input device may include at least part of the fingerprint sensor disposed to the second face 110B of the housing 110.

According to an embodiment, the connector hole 109 may accommodate a connector for transmitting/receiving power and/or data with respect to an external electronic device and/or a connector for transmitting/receiving an audio signal with respect to the external electronic device. For example, the connector hole 109 may include a Universal Serial Bus (USB) connector or an earphone jack. According to an embodiment, the USB connector and the earphone jack may be implemented as a single hole (e.g., 108 of FIG. 1 and FIG. 2). According to another embodiment (not shown), the electronic device 100 may transmit and receive power and/or data with respect to external electronic devices without an additional connector hole, or may transmit and receive an audio signal.

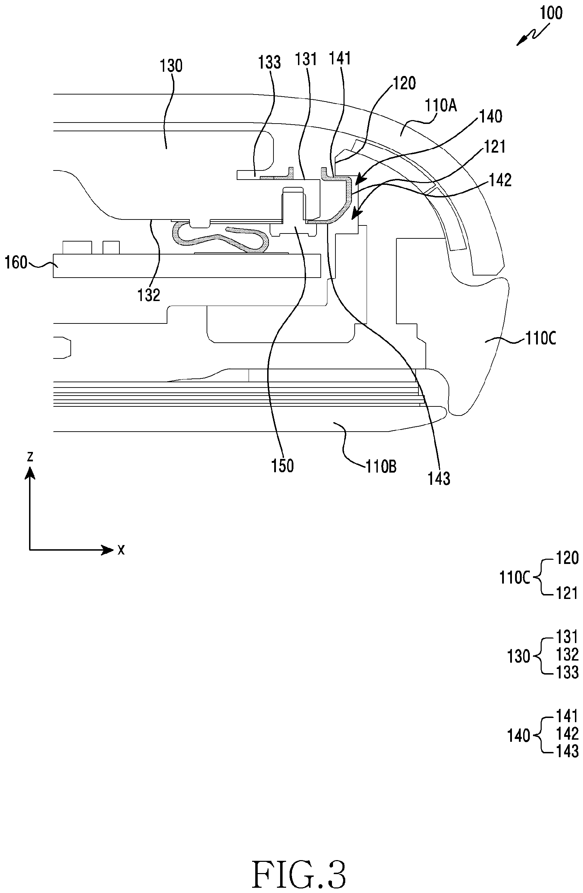

FIG. 3 is a cross-sectional view of an electronic device 100 according to an embodiment.

The electronic device 100 of FIG. 3 may be referenced by the electronic device 100 of FIG. 1 and FIG. 2. The same/similar reference numerals have been used for the same or substantially the same components as those described above, and redundant descriptions will be omitted.

Referring to FIG. 3, the electronic device 100 according to an embodiment may include a first plate 110A facing a first direction (e.g., a +Z-axis direction), a second plate 110B facing a second direction (e.g., a -Z-axis direction) opposite the first direction, a side member 110C surrounding at least part of a space formed between the first plate 110A and the second plage 110B, at least one support member 130 disposed inside the space, and at least one coupling member 140 joined to the support member. However, the electronic device is not limited to this structure. At least one of the aforementioned components may be omitted in the electronic device, or at least one component may be additionally included. For example, the electronic device 100 may further include a printed circuit board 160 disposed between the second plate 110B and the support member 130.

According to an embodiment, an inner face 120 of the side member 110C may include at least one groove 121. The at least one groove 121 may be formed concavely in a third direction (e.g., a +X-axis direction) facing the outside of the electronic device.

According to an embodiment, the support member 130 may include a first face 131 facing the first direction (or the first plate 110A), a second face 132 facing the second direction (or the second plate 110B), and a guide groove 133. According to an embodiment, the guide groove 133 may be formed on a face of the support member 130 facing the side member 110C (or facing the third direction).

According to an embodiment, the coupling member 140 may be joined to the support member 130. For example, the coupling member 140 may be fastened and fixed to a side of the support member 130. The support member 130 may be fixed to a housing by means of the coupling member 140. For example, since at least part of a second portion 142 (to be described below) of the coupling member 140 is accommodated in the at least one groove 121, the support member 130 may be fixed to the housing (e.g., the side member 110C).

According to an embodiment, the coupling member 140 may include a first portion 141 disposed to the first face 131 of the support member 130, the second portion 142 extending from the first portion 141, and a third portion 143 extending from the second portion 142. However, the coupling member 140 is not limited to this structure. At least one of the aforementioned components may be omitted in the coupling member 140, or at least one component may be additionally included. For example, referring to FIG. 3, the coupling member 140 may further include an extension extending from the third portion 142 and disposed between the support member 130 and the printed circuit board 160.

According to an embodiment, the guide groove 133 of the support member 130 may accommodate at least part of the first portion 141 of the coupling member 140. The guide groove 133 of the support member 130 may be formed to be guided along the first face 131. The guide groove 133 may be formed concavely in a fourth direction (e.g., a -X-axis direction) opposite the third direction. According to an embodiment, a bottom face of the guide groove 133 may form the same face as the first face 131. However, the disclosure is not limited thereto. According to an embodiment, at least part of the first portion 141 may be disposed to be guided along the first face 131 inside the guide groove 133. The first portion 141 of the coupling member 140 may move into the guide groove 133 on the first face 131.

According to an embodiment, the second portion 142 may protrude a first interval from the support member 130 in the third direction (e.g., the +X-axis direction) facing the side member 110C. For example, at least part of the second portion 142 may be spaced by a specific interval from a face of the support member 130 facing the at least one groove 121. At least part of the second portion 142 may be accommodated inside the at least one groove 121.

According to an embodiment, the third portion 143 may be fixed to the support member 130. For example, the third portion 143 may be fixed to the second face 132 of the support member 130. According to an embodiment, the third portion 143 may be fixed to the support member 130 by means of at least one screw 150 penetrating the third portion 143 and the second face 132 of the support member 130. However, the disclosure is not limited thereto. For example, the third portion 143 may be fixed to the support member 130 by using an adhesive member such as an adhesive tape or bond.

According to an embodiment, since the first portion 141 moves into the guide groove 133 in a state where the third portion 143 is fixed to the support member 130, an extent to which the second portion 142 protrudes from a face of the support member 13e0 may be reduced to be less than the first interval. For example, since the first portion 141 moves into the guide groove 133 on the first face 131, at least part of the second portion 142 may be elastically bent. For example, since the first portion 143 moves along the guide groove 133 on the first face 131, the second portion 142 may be deformed to protrude a second interval shorter than the first interval from the support member 130. Since the second portion 142 is bent or deformed, the second portion 142 may be detached from the at least one groove 121. Since the second portion 142 is detached from the at least one groove 121, the support member 130 may be detached from a housing (e.g., the side member 110C). Therefore, a user may replace or change the support member 130 and/or the coupling member 140.

According to an embodiment, the user may use a tension of the coupling member 140 to easily detach the support member 130 from the housing (e.g., the side member 110C) or fix or join the support member 130 to the housing. Since the coupling member 140 has the tension, the support member 130 may be detached from the housing (e.g., the side member 110C) without breaking or damaging a component thereof, by using the coupling member 140.

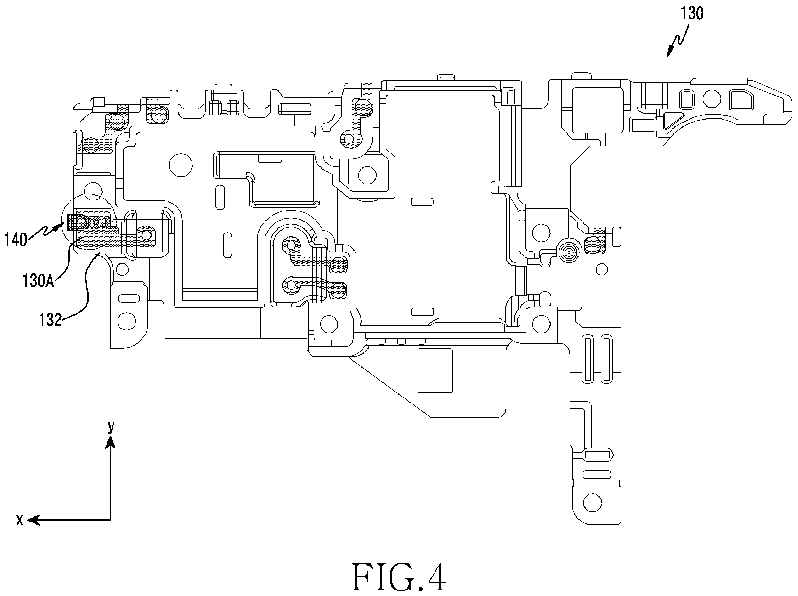

FIG. 4 is a plan view of a support member 130 according to an embodiment. FIG. 4 may be a plan view of the support member 130, viewed in a direction facing a second face of the support member 130 (e.g., the +Z-axis direction of FIG. 3) according to an embodiment.

The support member 130 of FIG. 4 may be referenced from the support member 130 of FIG. 3. The same/similar reference numerals have been used for the same or substantially the same components as those described above, and redundant descriptions will be omitted.

According to an embodiment, the support member 130 may be an antenna carrier. However, the disclosure is not limited thereto. For example, the support member 130 may be a rear top and/or rear bottom disposed inside the electronic device.

According to an embodiment, a conductive pattern 130A may be formed on the support member 130. The conductive pattern 130A may be formed on the support member 130 in a Laser Direct Structuring (LDS) manner.

According to an embodiment, a wireless communication circuit may supply power to a point of the conductive pattern 130A to transmit/receive a wireless signal by using the conductive pattern 130A. According to an embodiment, the conductive pattern 130A may operate as an antenna radiator.

Referring to FIG. 4, the support member 130 may include the at least one conductive pattern 130A. For example, the support member 130 may include the conductive pattern 130A formed on a face in contact with a coupling member 140. However, the disclosure is not limited thereto. For example, the support member 130 may include a conductive pattern also on a face not in contact with the coupling member 140.

According to an embodiment, the support member 130 may include the at least one conductive pattern 130A on a second face 132. However, the disclosure is not limited thereto. For example, although not shown in FIG. 4, the support member 130 may include a conductive pattern on a first face 131, and/or a side face supporting the first face 131 and the second face. A portion including the same shade as the conductive pattern 130A of FIG. 4 may be the conductive pattern.

According to an embodiment, the conductive pattern 130A may include an LDS conductive pattern. However, the disclosure is not limited thereto.

According to an embodiment, the at least one coupling member 140 may be disposed to a portion on which the at least one conductive pattern 130A is formed. The coupling member 140 may be in contact with the conductive pattern 130A. However, the disclosure is not limited thereto. The coupling member 140 may be disposed to a portion on which the conductive pattern is not disposed.

According to an embodiment, the coupling member 140 may be in contact with the conductive pattern 130A to electrically and/or operatively couple the conductive pattern 130A and other components of the electronic device. For example, the coupling member 140 may be a conductive member which couples a printed circuit board and the conductive pattern 130A.

According to an embodiment, the support member 130 may be formed through injection molding. A dielectric material having a specified permittivity may be formed on at least part of the support member 130.

According to an embodiment, the support member 130 may include a thermoplastic member. However, the disclosure is not limited thereto.

According to an embodiment, the coupling member 140 may include an elastic material and/or a metal material. For example, the coupling member 140 may include titanium (Ti), copper (Cu), or a titanium copper alloy (Ti-Cu). However, the disclosure is not limited thereto. The coupling member 140 may include various materials having elasticity and conductivity.

According to an embodiment, the coupling member 140 may include a metal coating layer. For example, the coupling member 140 may include aluminum (Al) or a palladium nickel alloy (Pd-Ni). However, the disclosure is not limited thereto.

According to an embodiment, at least part of the coupling member may have a thickness of about 0.1 T. For example, a portion (e.g., a second portion or an extension) which is bent in the coupling member may have a thickness of about 0.1 T. However, the disclosure is not limited thereto.

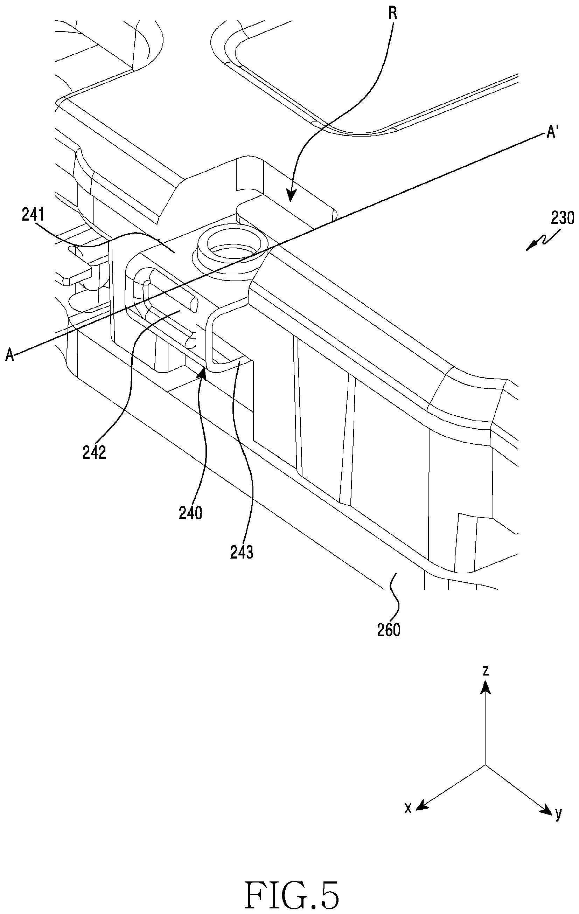

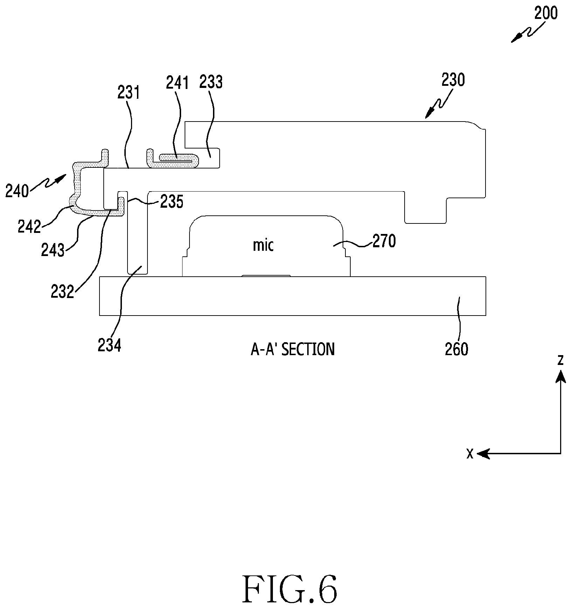

FIG. 5 is a perspective view of a support member 230 to which a coupling member 240 is disposed according to an embodiment. FIG. 6 is a cross-sectional view taken along the line A-A' of FIG. 5 according to an embodiment.

FIG. 5 and FIG. 6 may be views for an embodiment in which a microphone module 270 of FIG. 6 is disposed to a rear face of the support member 240. However, the disclosure is not limited thereto.

The coupling member 240 of FIG. 5 and FIG. 6 may be referenced from the coupling member 140 of FIG. 3 and FIG. 4, and the support member 230 of FIG. 5 and FIG. 6 may be referenced by the support member 130 of FIG. 3 and FIG. 4. The same/similar reference numerals have been used for the same or substantially the same components as those described above, and redundant descriptions will be omitted.

Referring to FIG. 5, the coupling member 240 may be fastened to a side of the support member 230. For example, a first portion 241 of the coupling member 240 may be disposed inside a recess R of the support member 230. A second portion 242 of the coupling member 240 may protrude from the support member 230. For example, the second portion 242 of the coupling member 240 may protrude a specific interval from the support member 230. A third portion 243 of the coupling member 240 may be disposed between the support member 230 and a printed circuit board 260.

Referring to FIG. 6, an electronic device 200 may include the support member 230, the printed circuit board 260 disposed to a rear face of the support member 230, and the microphone module 270 disposed between the support member 230 and the printed circuit board 260. However, the electronic device 200 is not limited to this structure. For example, at least one of the aforementioned components may be omitted in the electronic device 200, or at least one component may be additionally included.

According to an embodiment, as shown in FIG. 6, when the microphone module 270 is disposed between the support member 230 and the printed circuit board 260, the support member 230 may include a support portion 234 which supports the support member 230 so as to be spaced apart by a specific interval from the printed circuit board 260. The microphone module 270 may be disposed inside a space surrounded by the support member 230, the printed circuit board 260, and the support portion 234.

According to an embodiment, the coupling member 240 may be detached from at least one groove (e.g., the groove 121 of FIG. 3) by using a tension. For example, since the first portion 241 moves along a first face 231, the second portion 242 accommodated in the at least one groove (e.g., the groove 121 of FIG. 3) may be detached from the at least one groove.

When the coupling member 240 is physically detached from the at least one groove without the use of the tension, the support member 230 may be detached from a housing while rotating about a fixed axis, i.e., the second portion accommodated in the at least one groove. In this case, the microphone module 270 may be damaged or broken by the rotation of the support portion 234. Therefore, an area which may be in contact with the microphone module 270 when the support portion 234 rotates may be escaped. However, according to an embodiment of the disclosure, the coupling member 240 may be detached from the at least one groove by using the tension. Therefore, when the support member 230 joined to the coupling member 240 is detached from the housing, the support member 230 may not be detached from the housing while rotating about the fixed axis, i.e., the second portion accommodated in the at least one groove. For example, the support member 230 coupled to the coupling member 240 may be detached in a first direction (e.g., the +Z-axis direction of FIG. 3) from the housing. Therefore, the support portion 233 may not be escaped in a section.

According to an embodiment, a second face 232 of the support member 230 may include at least one accommodating portion 235 formed concavely in a direction facing the first face 231 (e.g., the first direction of FIG. 3) on the second face 232. Referring to FIG. 6, the at least one accommodating portion 235 may be formed between the support portion 234 and the second portion 242 of the coupling member 240. However, the disclosure is not limited thereto.

According to an embodiment, at least part of the third portion 243 of the coupling member 240 may be accommodated in the at least one accommodating portion 235. For example, an end of the third portion 243 may protrude in the first direction. Since at least part of the third portion 243 is accommodated (or inserted) in the at least one accommodating portion 235, the coupling member 240 may be fixed to the support member 230. For example, the third portion 243 of the coupling member 240 may be fixed to the second face 232 of the support member 230.

Although it is illustrated in FIG. 6 that at least part of the third portion 243 is accommodated in the at least one accommodating portion 235 to fix the coupling member 240 to the support member 230, the disclosure is not limited thereto. For example, referring to FIG. 3, the coupling member 140 may be fixed to the support member 130 by using the screw 150 penetrating the third portion 143 and inserted into the support member 130. The coupling member may be fixed to the support member by using an adhesive member such as an adhesive tape or bond.

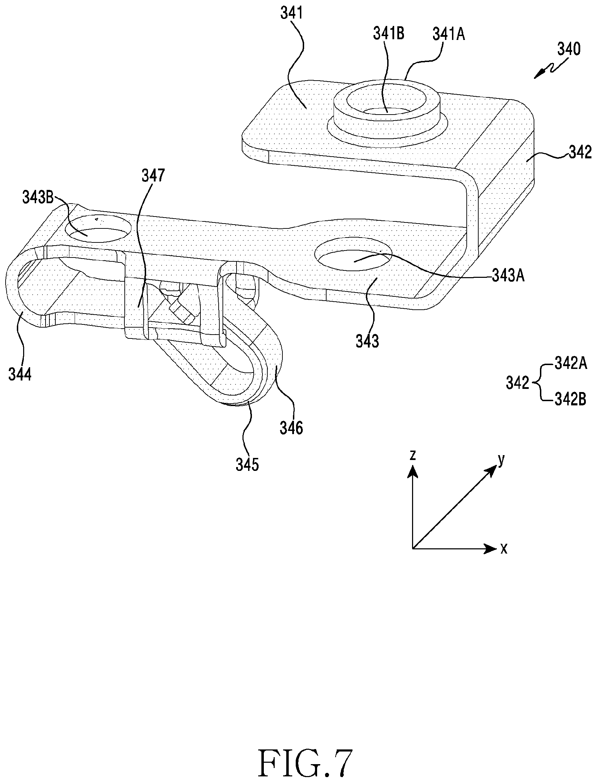

FIG. 7 is a perspective view of a coupling member 340 according to an embodiment.

The coupling member 340 of FIG. 7 may be referenced by the coupling member 140 of FIG. 3 and FIG. 4 or the coupling member 240 of FIG. 5 and FIG. 6. The same/similar reference numerals have been used for the same or substantially the same components as those described above, and redundant descriptions will be omitted.

Referring to FIG. 7, the coupling member 340 may include a shape in which one plate is bent multiple times at a specific portion. For example, a first portion 341 may mean a plate facing a first direction (e.g., a +Z-axis direction), a third portion 343 may mean a plate facing a second direction (e.g., a -Z-axis direction) and spaced by a specific interval from the first portion 341, and a second portion 342 may mean a plate disposed between the first portion 341 and the third portion 343. However, the disclosure is not limited thereto.

According to an embodiment, the first portion 341 of the coupling member 340 may face the third portion 343. The second portion 342 may be bent at least once between the first portion 341 and the third portion 343. For example, the second portion 342 may include a first part 342A extending from the first portion 341 and bent in the second direction (e.g., the -Z-axis direction) and a second part 342B extending from a first part 342A and including an inclined face forming an incline with the first part 342A. However, the disclosure is not limited thereto. For example, the second part 342 may include various shapes which are elastically bendable.

According to an embodiment, the first portion 341 of the coupling member 340 may include at least one protrusion 341A protruding in the first direction (e.g., the +Z-axis direction). Although it is illustrated in FIG. 7 that the protrusion 341A has a cylindrical shape, the shape of the protrusion 341A is not limited thereto. For example, the protrusion 341A may include a polygon, such as a square prism or a hexagonal prism. The protrusion 341A may have a plate shape protruding in the first direction.

According to an embodiment, the at least one protrusion 341A may be formed at a center portion of the first portion 341, but the disclosure is not limited thereto. For example, referring to FIG. 7, the at least one protrusion 341A may be formed at a position spaced apart from the second portion 342 and a terminal end of the first portion 341.

According to an embodiment, the at least one protrusion 341A may include at least one accommodating groove 341B formed concavely in the second direction (e.g., the -Z-axis direction). Although it is illustrated in FIG. 7 that the at least one accommodating groove 341B has a circular shape, the shape of the accommodating groove 341B is not limited thereto. For example, the accommodating groove 341B may include a polygonal shape, such as a square or a hexagon.

According to an embodiment, although it is illustrated in FIG. 7 that the at least one protrusion 341A includes the at least one accommodating groove 341B, the disclosure is not limited thereto. For example, the at least one protrusion 341A may not include the at least one accommodating groove 341B, or may include at least one undercut structure.

According to an embodiment, the at least one protrusion 341A and/or the at least one accommodating groove 341B may support a tool which applies a force such that the first portion 341 is guided on a first face (e.g., the first face 131 of FIG. 3). For example, the first portion 341 may move on the first face by the force applied from the tool to be inserted to the accommodating groove 341B.

According to an embodiment, the third portion 343 may include at least one hole penetrating the third portion 343. For example, the third portion 343 may include at least one first hole 343A formed at a portion adjacent to the second portion 342 and at least one second hole 343B spaced by a specific interval from the at least one first hole 343A. Referring to FIG. 7, the first hole 343A may be formed at a portion of the third portion 343 facing the first portion 341.

According to an embodiment, the first hole 343A may be formed parallel to the second hole 343B and the third portion 343 in a longitudinal direction (e.g., an X-axis direction). However, the disclosure is not limited thereto.

Although it is illustrated in FIG. 7 that at least one hole includes a circular shape, the shape of the at least one hole is not limited thereto. Although it is illustrated in FIG. 7 that the second portion 343 includes one first hole 343A and one second hole 343B, the number of the at least one hole is not limited thereto. For example, the third portion 343 may further include at least one hole.

According to an embodiment, the coupling member 340 may include extensions 344, 345, and 346 extending from the third portion 343. The extension may be formed to be elastically bent. Referring to FIG. 3, the extension may be a portion disposed between a support member (e.g., the support member 130 of FIG. 3) and a printed circuit board (e.g., the printed circuit board 160 of FIG. 3). A separation distance between the support member and the printed circuit board may be maintained by an elastic force provided by the extension. The printed circuit board and a conductive pattern (e.g., the conductive pattern 130A of FIG. 4) may be electrically and/or operatively coupled by means of the extension.

Referring to FIG. 7, the extensions 344, 345, and 346 according to an embodiment may include the fourth portion 344 extending from the third portion 343 and bent at least once and the fifth portion 345 extending from the fourth portion 344. However, the extension is not limited to this structure. For example, the extension may further include the sixth portion 346 extend from the fifth portion 345 and bent toward the third portion 343. Although it is illustrated in FIG. 7 that the extension extends from an end of the third portion 343, the disclosure is not limited thereto. For example, the extension may extend between the first hole 343A and second hole 343B of the third portion 343.

According to an embodiment, the coupling member 340 may include at least one guide portion 347 which prevents at least part of the extension from being deviated in one direction. At least part (e.g., the fifth portion 346) of the extension may be disposed between the one or more guide portions 347. Since the at least part of the extension is disposed between the one or more guide portions 347, the guide portion 347 may prevent the extension from being deviated in one direction (e.g., a Y-axis direction) when the extension is elastically bent.

According to an embodiment, the guide portion 347 may protrude in the second direction (e.g., the -Z-axis direction) in an edge of the third portion 343. However, the disclosure is not limited thereto.

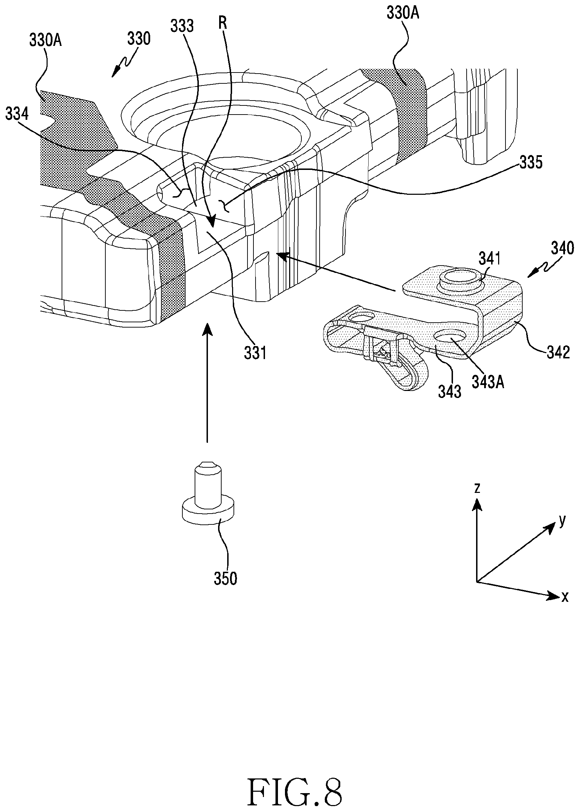

FIG. 8 is a perspective view illustrating an operation in which a coupling member 340 is joined to a support member 330 according to an embodiment.

The support member 330 of FIG. 8 may be referenced by the support member 130 of FIG. 3 and FIG. 4 or the support member 230 of FIG. 5 and FIG. 6. The coupling member 340 of FIG. 8 may be referenced by the coupling member 140 of FIG. 3 and FIG. 4, the coupling member 240 of FIG. 5 and FIG. 6, or the coupling member 340 of FIG. 7. The same/similar reference numerals have been used for the same or substantially the same components as those described above, and redundant descriptions will be omitted.

Referring to FIG. 8, the support member 340 may include a recess R formed of a first face 331 and side walls 334 and 335 surrounding at least part of the first face 331. The recess R may be open in a first direction (e.g., a +X-axis direction) and a third direction (e.g., a +Z-axis direction).

According to an embodiment, the side walls may include the first side wall 334 facing the third direction, the second side wall 335 substantially perpendicular to the first side wall 334 and the first face 331, and a third side wall facing the second side wall 335. Referring to FIG. 3, the first side wall 334 may face an inner face (e.g., 120 of FIG. 3) of the side member (e.g., 110C of FIG. 3). The second side wall 335 may be disposed between the first side wall 334 and the inner face of the side member. The third side wall may be disposed between the first side wall 334 and the inner face of the side member, and may face the second side wall 335. According to an embodiment, a guide groove 333 may be formed on the first side wall 334.

According to an embodiment, the coupling member 340 may be fixed to the support member 330 by using at least one screw 350. For example, the screw 350 may penetrate a first hole 343A of a third portion 343 and may be inserted into the support member 330, thereby fixing the coupling member 340.

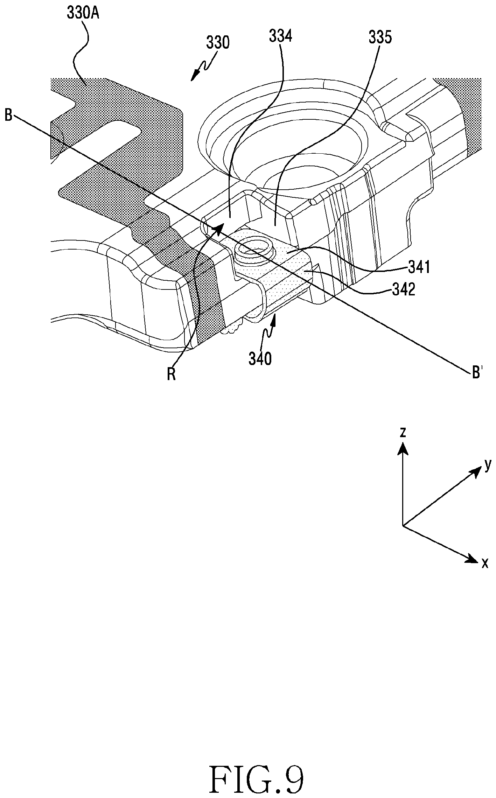

FIG. 9 is a perspective view of a support member 330 to which a coupling member 340 is disposed by the operation of FIG. 8 according to an embodiment.

The support member 330 and coupling member 340 of FIG. 9 may be referenced by the support member 130 and coupling member 340 of FIG. 3 and FIG. 4 or the support member 330 and coupling member 340 of FIG. 7 to FIG. 11. The same/similar reference numerals have been used for the same or substantially the same components as those described above, and redundant descriptions will be omitted.

Referring to FIG. 9, the coupling member 340 may be joined to the support member 330 according to the operations of FIG. 8. For example, the coupling member 340 may be fastened to the support member 330. A first portion 341 of the coupling member 340 may be disposed inside a recess R. For example, at least part of the first portion 341 may face the first face 331. The first portion 341 may be disposed between a second side wall 335 and a third side wall, in the recess R. Since the first portion 341 is disposed between the second side wall 335 and the third side wall in the recess R, the coupling member 340 may not move, or may move less, in a Y-axis direction due to the second side wall 335 and the third side wall when an external impact is applied to the electronic device.

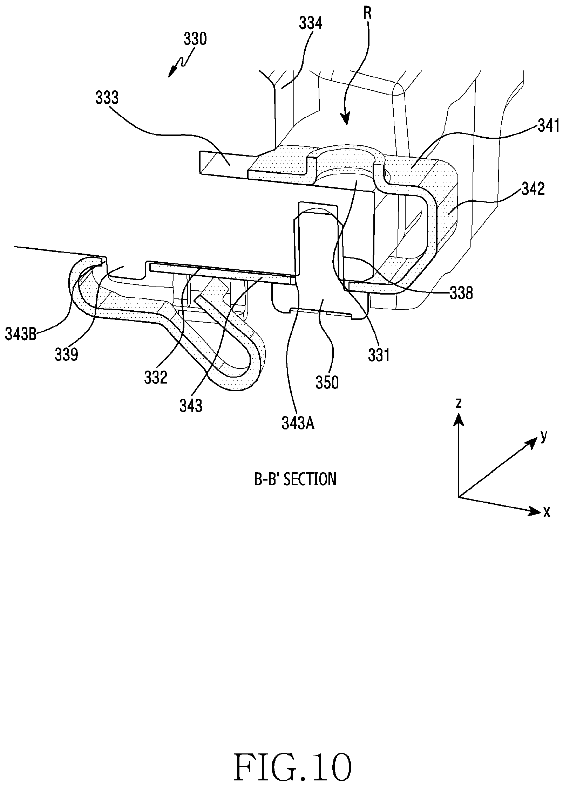

FIG. 10 is a cross-sectional perspective view taken along the line B-B' of FIG. 9 according to an embodiment.

A support member 330, coupling member 340, and screw 350 of FIG. 10 may be referenced by the support member 130 and coupling member 340 of FIG. 3 and FIG. 4 or the support member 330, coupling member 340, and screw 350 of FIG. 7 to FIG. 11. The same/similar reference numerals have been used for the same or substantially the same components as those described above, and redundant descriptions will be omitted.

Referring to FIG. 10, a guide groove 333 may be formed to extend from a first face 331. For example, a bottom face of the guide groove 333 may form the same face as the first face 331. A first portion 341 of the coupling member 340 may move while facing the bottom face of the guide groove 333 and the first face 331. However, the disclosure is not limited thereto.

According to an embodiment, in a state where the coupling member 340 is disposed (or joined) to the support member 330, the first portion 341 of the coupling member 340 may be disposed inside the guide groove 333 formed on a first side wall 334. For example, an end of the first portion 341 may be disposed inside the guide groove 333. Since at least part of the first portion 341 is disposed inside the guide groove 333, the coupling member 340 may not move, or may move less, in a Z-axis direction when an external impact is applied to the electronic device.

According to an embodiment, a second face 332 of the support member 330 may include at least one accommodating portion 338 formed concavely in a first direction (e.g., a +Z-axis direction). The accommodating portion 338 may be formed at a portion corresponding to a first hole 343A in a state where the coupling member 340 is disposed to the support member 330. The at least one screw 350 may penetrate the first hole 343A, and may be inserted into the at least one accommodating portion 338. An inner face of the at least one accommodating portion 338 may include a shape corresponding to an outer face of an inserted portion of the screw 350. The third portion 343 of the coupling member 340 may be fixed to the second face 332 of the support member 330 by means of the at least one screw 350. The at least one screw 350 may prevent or reduce the movement of the coupling member 340 in the Z-axis direction, when an external impact is applied to the electronic device.

According to an embodiment, since the first portion 341 moves on the first face 331, when at least part of a second portion 342 is elastically bent, a position of the at least one accommodating portion 338 to which the at least one screw 350 is inserted may be a bending axis of the coupling member 340. However, the disclosure is not limited thereto.

According to an embodiment, the second face 332 of the support member 330 may include at least one protrusion 339 protruding toward a second direction (e.g., a -Z-axis direction). The at least one protrusion 339 may be disposed to a portion corresponding to at least one second hole 343B in a state where the coupling member 340 is disposed to the support member 330. The at least one protrusion 339 may be accommodated in the at least one second hole 343B. Since the at least one protrusion 339 is accommodated in the at least one second hole 343B, a third portion 343 may be fixed to the support member 330. The at least one protrusion 339 may prevent the coupling member 340 from rotating about an area fixed by the screw 350, when an external impact is applied to the electronic device.

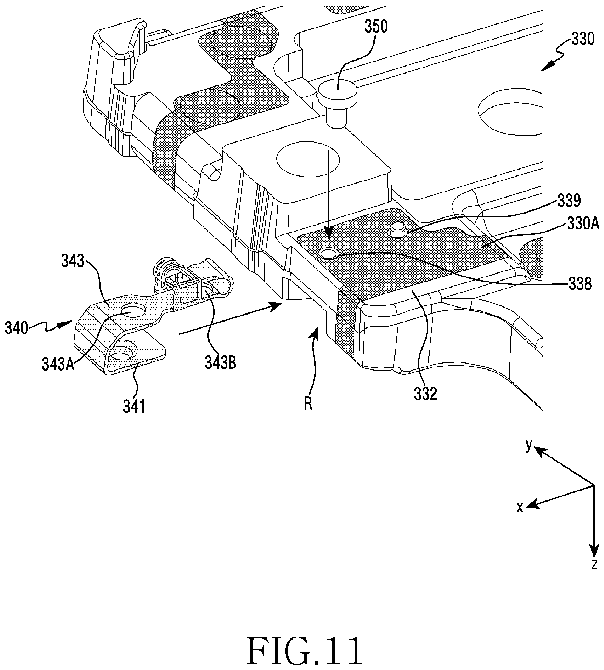

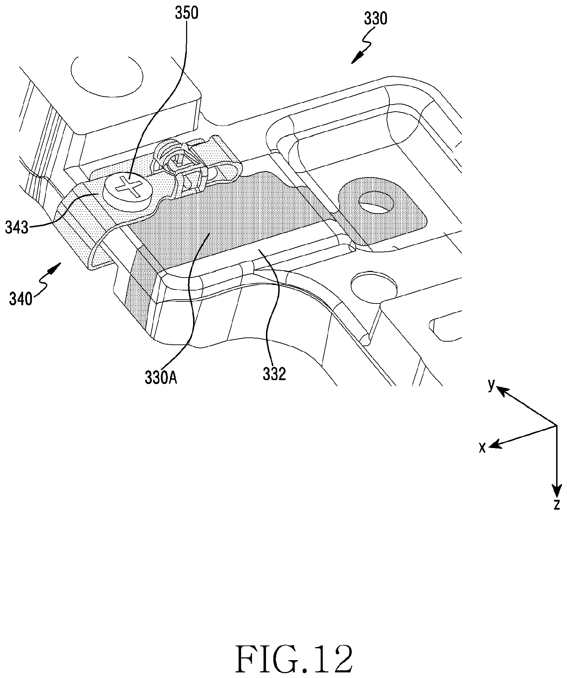

FIG. 11 is a perspective view illustrating an operation in which a coupling member 340 is joined to a support member 330 according to an embodiment. FIG. 12 is a perspective view illustrating a second face of a support member to which a coupling member is disposed according to an embodiment.

The support member 330, coupling member 340, and screw 350 of FIG. 11 and FIG. 12 may be referenced by the support member 130 and coupling member 340 of FIG. 3 and FIG. 4 or the support member 330, coupling member 340, and screw 350 of FIG. 7 to FIG. 10. The same/similar reference numerals have been used for the same or substantially the same components as those described above, and redundant descriptions will be omitted.

FIG. 11 and FIG. 12 may be perspective views in a direction facing the second face 332 of the support member 330 of FIG. 8.

According to an embodiment, a second face 332 of the support member 330 may include a conductive pattern 330A surrounding at least one accommodating portion 338 and/or at least one protrusion 399. Therefore, when the coupling member 340 is disposed to the support member 330, at least part of the coupling member 340 may face the conductive pattern 330A. For example, a third portion 343 of the coupling member 340 may face the conductive pattern 330A. The coupling member 340 may be a connection member which couples the conductive pattern 330A and a printed circuit board.

According to an embodiment, the coupling member 340 may be disposed such that the at least one second hole 343B accommodates the at least one protrusion 339. In a state where the at least one protrusion 339 is accommodated in the at least one second hole 343B, the at least one screw 350 may penetrate a first hole 343A of the coupling member 340 and may be inserted to the accommodating portion 338 of the support member 330. Therefore, the coupling member 340 may be fixed to the support member 330.

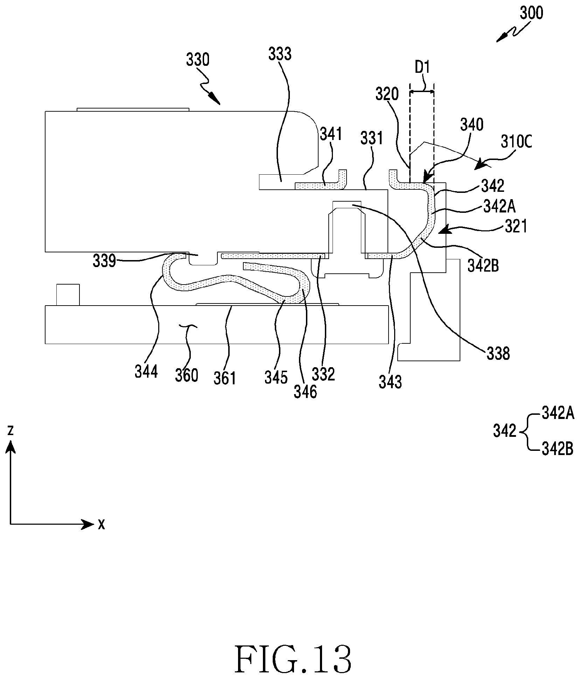

FIG. 13 is a cross-sectional view illustrating a state where a support member 330 having a coupling member 340 disposed thereto is disposed inside a housing according to an embodiment.

An electronic device 300 of FIG. 13 may be referenced by the electronic device 100 of FIG. 1 to FIG. 3. The support member 330, coupling member 340, and screw 350 of FIG. 13 may be referenced by the support member 130 and coupling member 340 of FIG. 3 and FIG. 4 or the support member 330, coupling member 340, and screw 350 of FIG. 7 to FIG. 12. The same/similar reference numerals have been used for the same or substantially the same components as those described above, and redundant descriptions will be omitted.

According to an embodiment, a first portion 341 of the coupling member 340 may move into a guide groove 333 on a first face 331 of a support member 330. A second portion 342 of the coupling member 340 may be accommodated in at least one groove 321. Referring to FIG. 13, the coupling member 340 may be accommodated inside the at least one groove 321 by a first length D1 in a third direction (e.g., an X-axis direction). Since the coupling member 340 (e.g., the second portion 342) is accommodated inside the at least one groove 321, the coupling member 340 may prevent or reduce the movement of the support member 330 in a Z-axis direction. The coupling member 340 may prevent the support member 330 from being detached from a housing (e.g., the side member 110C).

According to an embodiment, the electronic device 100 may include a printed circuit board 360 spaced apart by a specific interval from a second face 332 of the support member 330. The printed circuit board 360 may include at least one metal pad 361 on a face facing the second face 332.

According to an embodiment, at least part (e.g., an extension) of the coupling member 340 may be disposed between the support member 330 and the metal pad 361. According to an embodiment, the at least part of the coupling member 340 may be disposed such that at least one conductive pattern formed on the support member 330 is electrically coupled to the printed circuit board 360. For example, a third portion 343 of the coupling member 340 faces the conductive pattern, and a fifth portion 345 of the coupling member 340 may be in contact with the metal pad 361.

According to an embodiment, at least part of the coupling member 340 may be bent elastically between the support member 330 and the metal pad 361. For example, a fourth portion 344 of the coupling member 340 may be forced elastically and compressed in a second direction (e.g., a -Z-axis direction). A separation distance between the support member 220 and the metal pad 361 (or the printed circuit board 360) may be maintained by an elastic force provided by the fourth portion 344.

According to an embodiment, the fifth portion 345 of the coupling member 340 may include a curved face which is formed to be curved. Referring to FIG. 13, the fifth portion 345 may be formed convexly toward the metal pad 361. Since the fifth portion 345 includes the curved face, when the fourth portion 344 is compressed in the second direction between the support member 330 and the metal pad 361, the fifth portion 345 may be easily connected to the metal pad 361.

According to an embodiment, a sixth portion 346 of the coupling member 340 may be bent toward the second face 332 of the support member 330. However, the disclosure is not limited thereto.

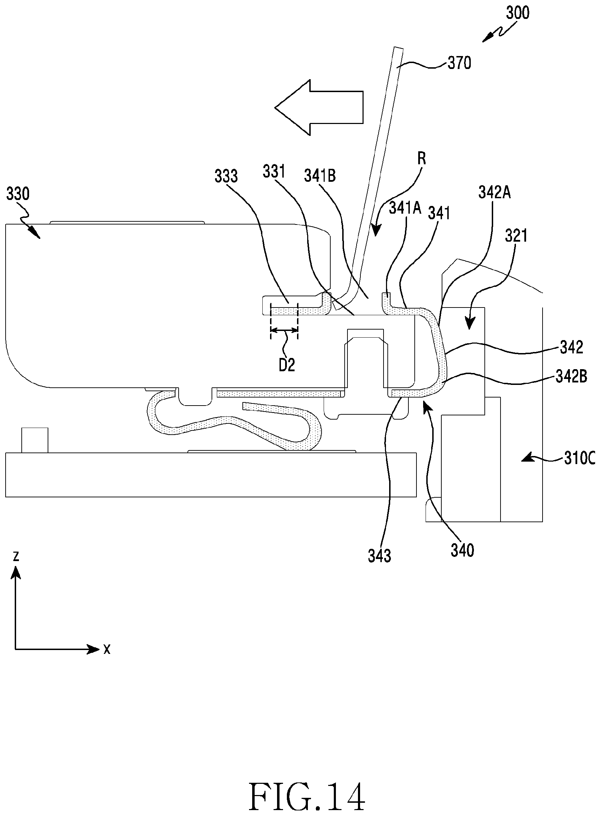

FIG. 14 is a cross-sectional view illustrating an operation in which a first portion 341 of a coupling member 340 moves along a first face 331 of a support member 330 according to an embodiment.

An electronic device 300 of FIG. 14 may be referenced by the electronic device 100 of FIG. 1 to FIG. 3. The support member 330, coupling member 340, and screw 350 of FIG. 14 may be referenced by the support member 130 and coupling member 340 of FIG. 3 and FIG. 4 or the support member 330, coupling member 340, and screw 350 of FIG. 7 to FIG. 13. The same/similar reference numerals have been used for the same or substantially the same components as those described above, and redundant descriptions will be omitted.

Referring to FIG. 14, at least part of the first portion 341 may be disposed inside a guide groove 333. Since the first portion 341 moves in a fourth direction (e.g., a -X-axis direction), the at least part of the first portion 341 may move inside the guide groove 333, and at least some of the remaining parts of the first portion 341 may move into the guide groove 333.

According to an embodiment, the first portion 341 of the coupling member 340 may move into the guide groove 333 along the first face 331 by using a tool 370. For example, the first portion 341 may move by means of a force applied from the tool 370 inserted to at least one accommodating groove 341B formed on a protrusion 341A. However, the disclosure is not limited thereto.

According to an embodiment, in order for the tool 370 to be inserted to the at least one accommodating groove 341B, a recess R may be open in a first direction (e.g., a +Z-axis direction) facing the first face 331. However, the disclosure is not limited thereto.

According to an embodiment, the tool 370 may be a disassembly tweezer. However, the disclosure is not limited thereto. For example, the tool 370 may include various shapes such as a rod shape or a ring shape, which may be inserted to the at least one accommodating groove 341B.

According to an embodiment, since the first portion 341 of the coupling member 340 moves along the first face 331, a second portion 342 may be disposed to be detached from at least one groove 321. For example, when a distance by which the first portion 341 moves in a third direction (e.g., an X-axis direction) along the first face 331 is a second length D2, the coupling member 340 may be disposed such that a first length (e.g., D1 of FIG. 13) of the coupling member 340 accommodated inside the at least one groove 321 is less than the second length D2. Therefore, since the first portion 341 moves along the first face 331 in a fourth direction (e.g., a -X-axis direction) which is a direction opposite the third direction, at least part (e.g., the second portion 342) of the coupling member 340 accommodated in the at least one groove 321 may be detached from the at least one grove 321.

According to an embodiment, since the first portion 341 of the coupling member 340 moves along the first face 331, at least part of the second portion 342 may be elastically bent. For example, since the first portion 341 moves in the fourth direction (e.g., the -X-axis direction), a first part 342A of the second portion 342 may be bent in the fourth direction. However, the disclosure is not limited thereto.

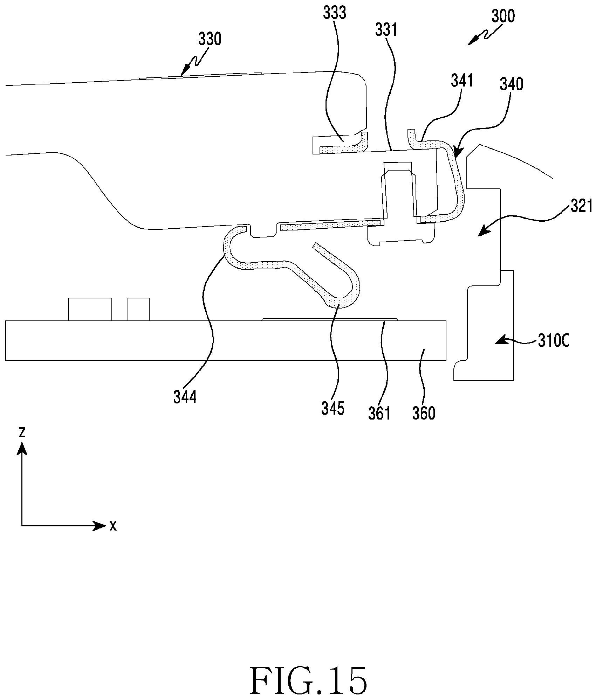

FIG. 15 is a cross-sectional view illustrating an operation in which a support member is detached from a housing according to an embodiment.

An electronic device 300 of FIG. 15 may be referenced by the electronic device 100 of FIG. 1 to FIG. 3. A support member 330, coupling member 340, and screw 350 of FIG. 15 may be referenced by the support member 130 and coupling member 340 of FIG. 3 and FIG. 4 or the support member 330, coupling member 340, and screw 350 of FIG. 7 to FIG. 14. The same/similar reference numerals have been used for the same or substantially the same components as those described above, and redundant descriptions will be omitted.

Referring to FIG. 15, since a first portion 341 of the coupling member 340 moves in a direction (e.g., a -X-axis direction) facing the inside of a guide groove 333, a second portion 341 may be detached from at least one groove 321. Since the second portion 341 is detached from the at least one groove 321, the support member 330 joined with the coupling member 340 may be detached from a housing (e.g., the side member 310C). Therefore, a user may easily change or replace the support member 330 and/or the coupling member 340. Accordingly, rework performance of the electronic device 300 may be improved.

According to an embodiment, since the support member 330 joined with the coupling member 340 is detached from the housing (e.g., the side member 310C), the coupling member 340 may be spaced apart from a printed circuit board 360. For example, a fifth portion 345 may be spaced apart from a metal pad 361. Since the coupling member 340 is spaced apart from the printed circuit board 360, at least part of the coupling member 340 may be restored by a restoring force. For example, a fourth portion 344 compressed by being disposed between the support member 330 and the printed circuit board 360 may be tensile.

According to an embodiment, since the coupling member 340 has a tension, the support member 330 may be detached from the housing (e.g., the side member 310C), or may be joined (or fixed) to the housing, without breaking or damaging a component thereof, by using the coupling member 340.

According to an embodiment, since the coupling member 340 has the tension, the support member 330 may be detached from the housing (e.g., the side member 310C), or may be joined (or fixed) to the housing, without breaking or damaging a component (e.g., the printed circuit board 360 or the metal pad 361) to be connected with the coupling member 340 (e.g., the fifth portion 345). The support member 330 may be connected with the component without breaking or damaging the component (e.g., the printed circuit board 360 or the metal pad 361) to be connected with the coupling member 340 (e.g., the fifth portion 345).

According to an embodiment, since the coupling member 340 has the tension, when the support member 330 joined with the coupling member 340 is detached from the housing (e.g., the side member 310C), a portion (e.g., a second portion 342) accommodated in the at least one groove 321 may not be abraded or may be less abraded.

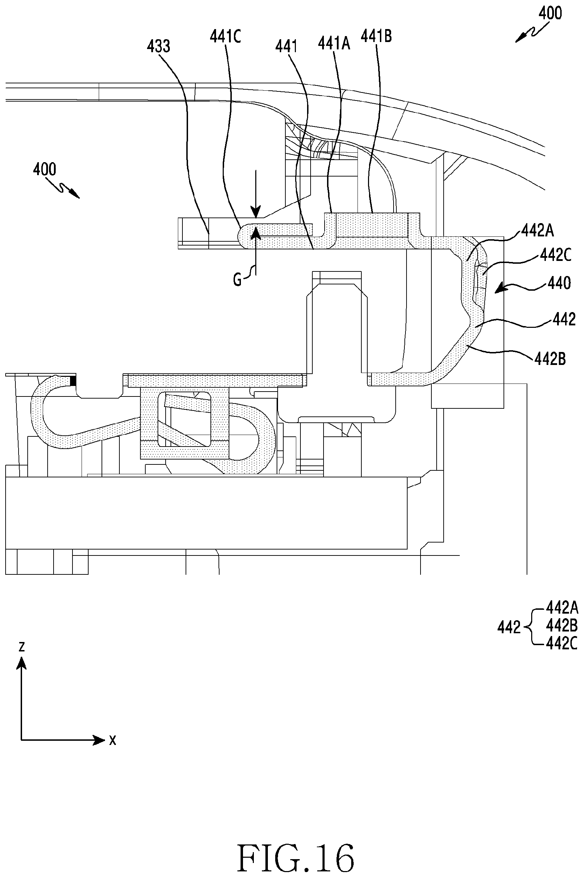

FIG. 16 is a cross-sectional view of an electronic device 400 according to an embodiment.

The electronic device 400 of FIG. 16 and components thereof may be referenced by the electronic device 100 of FIG. 1 to FIG. 3 and components thereof and/or the electronic device 300 of FIG. 13 to FIG. 15 and components thereof. The same/similar reference numerals have been used for the same or substantially the same components as those described above, and redundant descriptions will be omitted.

Referring to FIG. 16, a first portion 441 of a coupling member 440 may include a bending portion 441C bent from an end of a first portion 441 at least once in a third direction (e.g., a +X-direction). Since the first portion 441 of the coupling member 440 includes the bending portion 441C, the first portion 441 may decrease in thickness in a first direction (e.g., a +Z-axis direction). Therefore, the rigidity of the coupling member 440 may be improved.

According to an embodiment, at least part of the at least one bending portion 441C may be disposed inside a guide groove 433. Since the first portion 441 includes the bending portion 441C, a height difference G1 between the guide groove 433 and the first portion 441 may be reduced. Therefore, the bending portion 441C may prevent the coupling member 440 from being detached from a support member 430 in the Z-axis direction when an external impact is applied to the electronic device 400.

According to an embodiment, a second portion 442 of the coupling member 440 may include a first part 442A and a second part 442B. According to an embodiment, the first part 442A may have a thickness different from that of the second part 442B. For example, the thickness of the first part 442A may be thicker than the thickness of the second part 442B. Therefore, the rigidity of the second portion 442 may be improved.

According to an embodiment, the second portion 442 may include at least one reinforcement portion. For example, the second portion 442 may include at least one concave portion 442C formed concavely in a fourth direction (e.g., a -X-axis direction). The at least one concave portion 442C may include a dimple shape. However, the disclosure is not limited thereto.

According to an embodiment, since the second portion 442 includes the at least one reinforcement portion, an extent to which the second portion 442 is deformed may be reduced. Therefore, the rigidity of the second portion 442 may be improved.

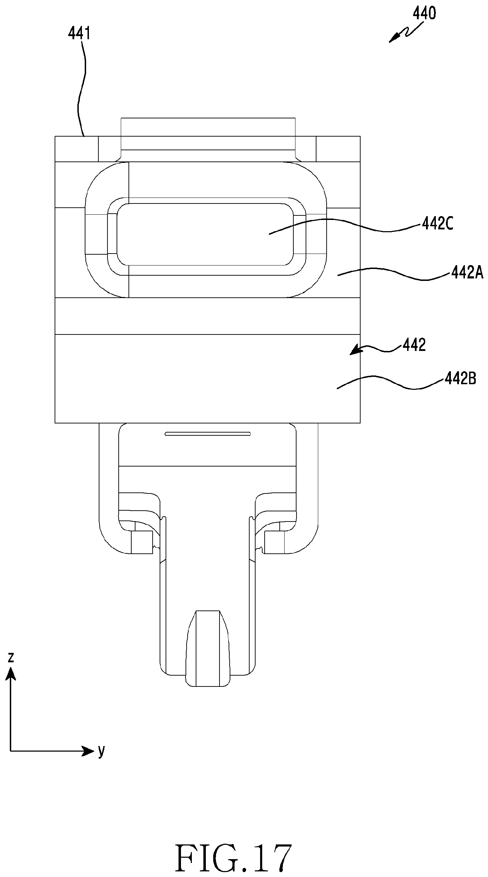

FIG. 17 is a plan view of a coupling member 440 according to an embodiment.

The coupling member 440 of FIG. 17 may be referenced by the coupling member 140 of FIG. 3 and FIG. 4, the coupling member 240 of FIG. 5 and FIG. 6, the coupling member 340 of FIG. 7 to FIG. 15, and/or the coupling member 440 of FIG. 16. The same/similar reference numerals have been used for the same or substantially the same components as those described above, and redundant descriptions will be omitted.

Referring to FIG. 17, a first part 442A of a second portion 442 may include at least one reinforcement portion. For example, the first part 442A may include at least one concave portion 442C. The at least one concave portion 442C may include a dimple shape.

According to an embodiment, since the second portion 442 includes the at least one reinforcement portion, an extent to which the second portion 442 is deformed may be reduced. Therefore, the rigidity of the second portion 442 may be improved.

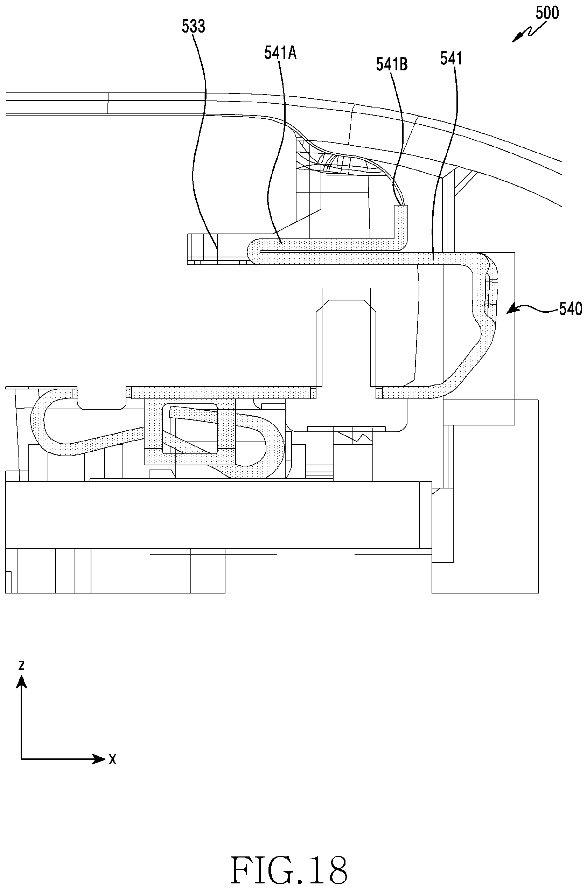

FIG. 18 is a cross-sectional view of an electronic device according to an embodiment.

A coupling member 540 of FIG. 18 may be referenced by the coupling member 140 of FIG. 3 and FIG. 4, the coupling member 240 of FIG. 5 and FIG. 6, and/or the coupling member 340 of FIG. 7 to FIG. 15. The same/similar reference numerals have been used for the same or substantially the same components as those described above, and redundant descriptions will be omitted.

Referring to FIG. 18, a first portion 541 of the coupling member 540 may include a bending portion 541A bent from an end of the first portion 541 at least once in a third direction (e.g., a +X-direction). Since the first portion 541 of the coupling member 540 includes the bending portion 541A, the first portion 541 may decrease in thickness in a first direction (e.g., a +Z-axis direction). Therefore, the rigidity of the coupling member 540 may be improved.

According to an embodiment, at least part of the at least one bending portion 541A may be disposed inside a guide groove 533. Since the first portion 541 includes the bending portion 541A, a height difference between the guide groove 533 and the first portion 541 may be reduced. Therefore, the bending portion 541A may prevent the coupling member 540 from being detached from a support member 530 in the Z-axis direction when an external impact is applied to an electronic device 500.

According to an embodiment, the first portion 541 may include at least one protrusion 541B extending from the bending portion 541A and protruding toward the first direction (e.g., the +Z-axis direction). The first portion 541 may move into the guide groove 533 along a first face by using a tool. The first portion 541 may move by means of a force applied from a tool supported by the protrusion 541B. However, the disclosure is not limited thereto. For example, the protrusion 541B may serve as a tool for moving the first portion 541.

As described above, an electronic device according to an embodiment may include a housing including a first plate facing a first direction, a second plate facing a second direction opposite the first direction, and a side member which at least partially surrounds a space formed between the first plate and the second plate and has at least one groove formed concavely on an inner face in a third direction facing an outside of the electronic device.

According to an embodiment, the electronic device may include a support member disposed inside the space and including a first face facing the first direction and a second face facing the second direction.

According to an embodiment, the electronic device may include a coupling member which includes a first portion disposed on the first face of the support member, a second portion extending from the first portion and protruding a first interval from the support member in the third direction, and a third portion extending from the second portion and fixed to the second face of the support member.

According to an embodiment, the support member may include at least one guide groove formed such that the first portion of the coupling member is guided along the first face of the support member.

According to an embodiment, the second portion of the coupling member may be accommodated in the at least one groove to fix the support member to the housing, and may be deformed so as to protrude a second interval shorter than the first interval from the support member as the first portion of the coupling member moves along the guide groove on the first face.

According to an embodiment, as the first portion of the coupling member moves into the guide groove in a fourth direction opposite the third direction, at least part of the second portion may be elastically bent in the fourth direction.

According to an embodiment, the first portion may include a protrusion protruding in the first direction.

According to an embodiment, the protrusion may include at least one accommodation groove formed concavely in the second direction. The first portion may be moved into the guide groove by a force applied from a tool inserted into the accommodating groove.

According to an embodiment, at least part of the first portion may be disposed inside the guide groove.

According to an embodiment, the first portion may include a bending portion bent from an end of the first portion at least once in the third direction. At least part of the bending portion may be disposed inside the guide groove.

According to an embodiment, the second portion may include a first part extending from the first portion and bent in the second direction and a second part extending from the first part and including an inclined face forming an incline with the first part.

According to an embodiment, the first part may be formed to be thicker than the first part.

According to an embodiment, the support member may include a recess which is formed of the first face and a side wall surrounding at least part of the first face, and which is open in the first direction and the third direction. The first portion of the coupling member may be disposed inside the recess and is moved into the guide groove.

According to an embodiment, the recess may include a first side wall facing an inner face of the side member, a second side wall disposed between the inner face of the side member and the first side wall, and a third side wall disposed between the inner face of the side member and the first side wall and facing the second side wall. The guide groove may be formed on the first side wall.

According to an embodiment, the electronic device may include a printed circuit board spaced apart by a specific interval from the second face of the support member and including a metal pad.

According to an embodiment, the support member may include at least one conductive pattern formed on a face in contact with the coupling member.

According to an embodiment, the coupling member may include an extension extending from the third portion and disposed to electrically couple the conductive pattern and the printed circuit board.

According to an embodiment, the extension may be formed to be elastically bent. A separation distance between the support member and the printed circuit board maty be maintained by an elastic force provided by the extending portion.

According to an embodiment, the extension may include a fourth portion extending from the third portion and bent at least once, and a fifth portion extending from the fourth portion and in contact at least in part with the metal pad.

According to an embodiment, the extension may include a sixth portion extending from the fifth portion and bent toward the second face of the support member.

According to an embodiment, the support member may include a thermoplastic material.

According to an embodiment, the conductive pattern may include an LDS conductive pattern.

According to an embodiment, the coupling member may include an elastic material and/or a metal material.

According to an embodiment, at least part of the coupling member may have a thickness of 0.1 T.

According to an embodiment, the third portion may include at least one first hole.

According to an embodiment, the coupling member may be fixed to the support member by using at least one screw penetrating the at least one first hole.

According to an embodiment, a second face of the support member may include at least one accommodating portion formed concavely toward the first direction. At least part of the third portion may be disposed to be accommodated in the at least one accommodating portion.

According to an embodiment, the third portion may include at least one second hole. A second face of the support member may include at least one protrusion protruding toward the second direction and accommodated in the at least one second hole.

According to an embodiment, since the first portion moves into the guide groove along the first face, the second portion may be disposed to be detached from the at least one groove of the side face.

As described above, an electronic device according to an embodiment may include a housing including a front plate, a rear plate, and a side member surrounding a space formed between the front plate and the rear plate and including at least one groove formed concavely on an inner face.

According to an embodiment, the electronic device may include a support member disposed inside the space and including a first face facing the front plate and a second face facing the rear plate.

According to an embodiment, the electronic device may include a coupling member which includes a first portion disposed on the first face of the support member, a second portion extending from the first portion and protruding a first interval from the support member toward the side member, and a third portion extending from the second portion and fixed to the second face of the support member.

According to an embodiment, the support member may include at least one guide groove formed such that the first portion of the coupling member is guided along the first face of the support member.

According to an embodiment, the second portion of the coupling member may be accommodated in the at least one groove to fix the support member to the housing, and may be deformed so as to protrude a second interval shorter than the first interval from the support member as the first portion of the coupling member moves along the guide groove on the first face.

## Claims

1. An electronic device comprising:
a housing including a first plate facing a first direction, a second plate facing a second direction opposite the first direction, and a side member which at least partially surrounds a space formed between the first plate and the second plate and has at least one groove formed concavely on an inner face in a third direction facing an outside of the electronic device;
a support member disposed inside the space and including a first face facing the first direction and a second face facing the second direction; and
a coupling member which includes a first portion disposed on the first face of the support member, a second portion extending from the first portion and protruding a first interval from the support member in the third direction, and a third portion extending from the second portion and fixed to the second face of the support member,
wherein the support member includes at least one guide groove formed such that the first portion of the coupling member is guided along the first face of the support member, and
wherein the second portion of the coupling member is accommodated in the at least one groove to fix the support member to the housing, and is deformed so as to protrude a second interval shorter than the first interval from the support member as the first portion of the coupling member moves along the guide groove on the first face.

2. The electronic device of claim 1, wherein, as the first portion of the coupling member moves into the guide groove in a fourth direction opposite the third direction, at least part of the second portion is elastically bent in the fourth direction.

3. The electronic device of claim 1, wherein the first portion includes a protrusion protruding in the first direction.

4. The electronic device of claim 3, wherein the protrusion includes at least one accommodation groove formed concavely in the second direction, and the first portion is moved into the guide groove by a force applied from a tool inserted into the accommodating groove.

5. The electronic device of claim 1, wherein at least part of the first portion is disposed inside the guide groove.

6. The electronic device of claim 1,
wherein the first portion includes a bending portion bent from an end of the first portion at least once in the third direction, and
wherein at least part of the bending portion is disposed inside the guide groove.

7. The electronic device of claim 1, wherein the second portion includes a first part extending from the first portion and bent in the second direction and a second part extending from the first part and including an inclined face forming an incline with the first part.

8. The electronic device of claim 7, wherein the first part is formed to be thicker than the first part.

9. The electronic device of claim 1,
wherein the support member includes a recess which is formed of the first face and a side wall surrounding at least part of the first face, and which is open in the first direction and the third direction, and
wherein the first portion of the coupling member is disposed inside the recess and is moved into the guide groove.

10. The electronic device of claim 9,
wherein the recess includes a first side wall facing an inner face of the side member, a second side wall disposed between the inner face of the side member and the first side wall, and a third side wall disposed between the inner face of the side member and the first side wall and facing the second side wall, and
wherein the guide groove is formed on the first side wall.

11. The electronic device of claim 1, further comprising
a printed circuit board spaced apart by a specific interval from the second face of the support member and including a metal pad,
wherein the support member includes at least one conductive pattern formed on a face in contact with the coupling member, and
wherein the coupling member includes an extension extending from the third portion and disposed to electrically couple the conductive pattern and the printed circuit board.

12. The electronic device of claim 11,
wherein the extension is formed to be elastically bent, and
wherein a separation distance between the support member and the printed circuit board is maintained by an elastic force provided by the extending portion.

13. The electronic device of claim 12, wherein the extension includes:
a fourth portion extending from the third portion and bent at least once; and
a fifth portion extending from the fourth portion and in contact at least in part with the metal pad.

14. The electronic device of claim 1,
wherein a second face of the support member includes at least one accommodating portion formed concavely toward the first direction, and
wherein at least part of the third portion is disposed to be accommodated in the at least one accommodating portion.

15. The electronic device of claim 1,
wherein the third portion includes at least one second hole, and
wherein a second face of the support member includes at least one protrusion protruding toward the second direction and accommodated in the at least one second hole.
